# EUROPÄISCHE PATENTSCHRIFT

(11) **EP 1 998 020 B1**
(45) Veröffentlichungstag und Bekanntmachung des Hinweises auf die Patenterteilung: **22.05.2013**
(21) Anmeldenummer: 08006564.2
(22) Anmeldetag: 31.03.2008
(51) Int. Cl.: F01P 7/16, F01P 11/16, F16K 1/20

(54) **Kühlsystem für eine Brennkraftmaschine**
Cooling system for a combustion engine
Système de refroidissement pour moteur à combustion interne

(30) Priorität: 30.05.2007 DE 102007025149
(43) Veröffentlichungstag der Anmeldung: 03.12.2008
(73) Patentinhaber: Bayerische Motoren Werke Aktiengesellschaft, 80809 München (DE)
(72) Erfinder: Chekaiban, Georg, 85283 Wolnzach (DE)

(56) Entgegenhaltungen:
- EP-A1- 0 860 592
- EP-A1- 1 045 120
- WO-A1-2006/078607
- DE-A1- 4 212 971
- DE-A1- 10 143 091
- DE-A1- 10 234 087
- FR-A1- 2 524 601
- US-A- 2 090 401
- US-A1- 2003 047 703

## Beschreibung

Die Erfindung bezieht sich auf ein Kühlsystem für eine Brennkraftmaschine, mit einer schaltbaren Kühlmittel-Umwälzpumpe und mindestens einem den Kühlmittelkreis bei stillstehender Umwälzpumpe zur Vermeidung eines Thermosyphoneffekts blockierenden Verschlusselement, nach dem Oberbegriff des Patentanspruchs 1.

Aus der US 2003/047703 A1 ist zur Regulierung eines Volumenstroms eine mehrteilige, entgegen einer Federvorspannung aktuatorbetätigt aus der Verschluss- in die Öffnungslage verstellbare Drosselklappe bekannt.

Die WO 2006/078607 offenbart ein aktuatorbetätigtes Mehrwegeverteilerventil zur Steuerung des Kühlmittelstroms zwischen dem Haupt- und dem Nebenstrom-Kühlmittelkreislauf einer Brennkraftmaschine.

Nach der EP 0 860 592 A1 ist zur Druckregulierung im Kühlmittelkreislauf einer Brennkraftmaschine eine federnd in die Verschlusslage vorgespannte Drosselklappe auf der Saugseite der Umwälzpumpe angeordnet.

Die EP 1 045 120 A1 offenbart ein ebenfalls im Kühlmittelkreislauf einer Brennkraftmaschine auf der Saugseite der Umwälzpumpe angeordnetes, membrangesteuertes Druckregelventil, welches bei stillstehender Umwälzpumpe unter Federvorspannung selbsttätig in die Verschlusslage gelangt und dadurch einen durch einen Thermosyphoneffekt verursachten Kühlmittelrückstrom unterbindet.

In der FR 2 524 601 A1 ist eine pumpenlose Solaranlage beschrieben, bei der im Wärmemittelkreislauf ein Verschlussorgan in Form eines federbelasteten Rückschlagventils zur Verhinderung eines bei nachlassender Solarleistung entstehenden Wärmemittelrückstroms enthalten ist.

Die DE 101 43 091 A1 bezieht sich auf einen Kühlmittel- und Heizungskreislauf für Brennkraftmaschinen, bei dem zur Verhinderung eines Thermosyphoneffekts Ventile in der Rücklaufleitung zur Brennkraftmaschine und im Zulauf zum Kabinenwärmetauscher angeordnet sind.

Aus der DE 42 12 971 A1 und der US 2 090 401 A ist jeweils ein Kühlmittelsystem für eine Brennkraftmaschine bekannt, bei welchem die Thermosyphonwirkung bei stillstehender Umwälzpumpe in der Warmlaufphase durch Anordnung einer Rückschlagklappe oder eines Rückschlagventils im Kühlmittelkreis angepasst wird. Ein derartiges Kühlsystem mit passivem Rückschlagelement ist darauf beschränkt, dass die Umwälzpumpe mit einer gleichbleibenden Förderrichtung arbeitet und die Thermosyphonwirkung ebenfalls stets in vorgegebener Richtung, nämlich entgegengesetzt zur Förderrichtung der Umwälzpumpe, verläuft.

Bei einem weiteren, aus der DE 102 34 087 A1 bekannten Kühlsystem der eingangs genannten Art wird eine Kühlmittelförderung durch Thermosyphonwirkung mit Hilfe von elektrisch betätigten Sperrventilen unterbunden, die bei abgeschalteter Umwälzpumpe in der Warmlaufphase der Brennkraftmaschine auf dem Wege über eine elektronische Steuereinheit in Abhängigkeit von Betriebs- und Umgebungsparametern geschlossen werden und dadurch den Kühlmittelkreislauf blockieren. Eine derartige Ventilsteuerung erfordert einen erhöhten Bau- und Steueraufwand.

Vor allem aber besteht bei den bekannten Kühlsystemen die Gefahr, dass Druckunterschiede, die bei stillstehender Umwälzpumpe oberhalb des Thermosyphoneffekts im Kühlmittelkreislauf entstehen, an dem geschlossenen Absperrorgan blockiert werden, was der Forderung nach einem atmungsfähigen Kühlsystem widerspricht und beim Entlüften und/oder Befüllen des Kühlsystems zu Funktionsstörungen führen kann.

Demgegenüber ist es Aufgabe der Erfindung, das Kühlsystem der eingangs genannten Art so auszubilden, dass eine Thermosyphonströmung mit Sicherheit unterbunden wird, das Atmungsvermögen des Kühlmittelsystems bei Druckanstiegen oberhalb des Thermosyphondrucks aber ungestört erhalten bleibt.

Diese Aufgabe wird erfindungsgemäß durch das im Patentanspruch 1 gekennzeichnete Kühlsystem gelöst.

Erfindungsgemäß wird aufgrund der besonderen Arbeitsweise des Absperrorgans sichergestellt, dass eine Kühlmittelströmung unter Thermosyphonwirkung, gleichgültig auf welcher Seite des Absperrorgans der höhere Druck ansteht, wirksam verhindert wird, während andrerseits eine Zwangsströmung des Kühlmittels und vor allem auch bei abgeschalteter Umwälzpumpe ein Druckanstieg oberhalb des Thermosyphondrucks vom Absperrorgan in beiden Richtungen ungehindert durchgelassen wird, so dass das Atmungsvermögen des Kühlsystems oberhalb des Thermosyphoneffekts in vollem Umfang erhalten bleibt, mit der weiteren Besonderheit, dass die richtungsunabhängige Sperrwirkung des Absperrorgans nicht nur in der Warmlaufphase, sondern auch noch in der Abkühlphase nach Abschalten der Brennkraftmaschine aufrechterhalten wird und dadurch thermosyphonbedingte Wärmeverluste, die das Warmlaufen der Brennkraftmaschine nach einem Neustart verzögern würden, weitgehend unterbunden werden.

In baulich besonders bevorzugter Ausgestaltung der Erfindung ist das Absperrorgan als selbsttätig arbeitendes, passives Verschlusselement ausgebildet, und zwar zweckmäßigerweise als beidseitig einer mittleren Schließlage öffnende Verschlussklappe, die im einfachsten Fall unter Schwerkraftwirkung, vorzugsweise aber unabhängig von der Einbaulage federnd in der Schließlage gehalten ist, wobei als Rückstellfeder in weiterer baulicher Vereinfachung eine Torsionsfeder vorgesehen ist, die gleichzeitig die Drehachse der Verschlussklappe bildet.

Vorzugsweise ist das Absperrorgan in eine Kühlmittel- und insbesondere in eine Schlauchkupplung des Kühlsystems integriert, wodurch ein besonders platzsparender Einbau des Absperrorgans bei zugleich guter Zugänglichkeit erreicht wird, wahlweise oder zusätzlich lässt sich jedoch auch zumindest ein Absperrorgan in den Kühlmittelkanälen des Motorblocks unterbringen.

Die Erfindung wird nunmehr anhand zweier Ausführungsbeispiele in Verbindung mit den Zeichnungen näher erläutert. Es zeigen in stark schematisierter Darstellung:
- **Fig. 1**: das Schaltbild eines Kühlsystems für eine Brennkraftmaschine mit mehreren Absperrorganen nach der Erfindung;
- **Fig. 2a, b**: eines der Absperrorgane des in Fig.1 gezeigten Kühlsystems im Längs- (a) und im Querschnitt (b);und
- **Fig. 3a, b**: ein weiteres Ausführungsbeispiel eines Absperrorgans im Quer- (a) und Längsschnitt (b).

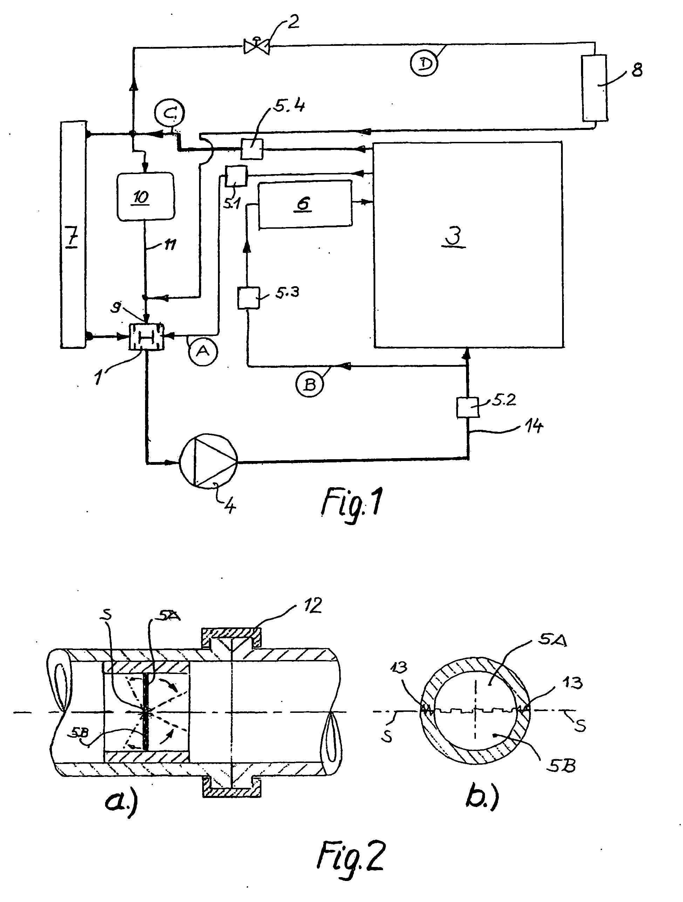

Das in Fig. 1 gezeigte Kühlsystem enthält mehrere, mittels eines Kennfeld-Thermostatventils 1 und eines z. B. elektrisch betätigten Steuerventils 2 selektiv zu- und abschaltbare Kühlmittelpfade A....D, welche an das Kühlkanalsystem der Brennkraftmaschine 3 angeschlossen sind und durch eine gemeinsame Kühlmittel-Umwälzpumpe 4 betrieben werden.

Im Zuge der Kühlmittelpfade A, B und C sind weiter unten näher beschriebene Absperrorgane 5.1...5.4 angeordnet, durch die ein Thermosyphoneffekt bei abgeschalteter Umwälzpumpe 4 wirksam unterbunden wird.

Der Kühlmittelpfad A verläuft von der Brennkraftmaschine 3 über ein Absperrorgan 5.1 zum Thermostatventil 1 und von dort über ein weiteres Absperrorgan 5.2 zurück zur Brennkraftmaschine 3 und fungiert als Bypasskreis beim Kaltstart oder in der Niedrigtemperaturphase der Brennkraftmaschine 3.

Der Kühlmittelpfad B führt von einer Abzweigung abströmseitig der Pumpe 4 auf dem Weg über ein Absperrorgan 5.3 zum Ölkühler 6 und dann in das Kühlkanalsystem der Brennkraftmaschine 3.

Der Kühlmittelpfad C bildet den Hauptkühlkreis, welcher wechselweise zum Bypasspfad A in der im Sinne der Fig. 1 rechten Schaltposition des Thermostatventils 1 im Bereich höherer Betriebstemperaturen der Brennkraftmaschine 3 aktiviert wird und von einem Kühlmittelauslass der Brennkraftmaschine 3 über ein Absperrorgan 5.4 und den Kühler 7 zum Thermostatventil 1 und dann in gleicher Weise wie der Bypasspfad A wieder zurück zur Brennkraftmaschine 3 verläuft.

Der Kühlmittelpfad D schließlich, der zur Temperierung des Fahrzeug-Innenraums dient und mittels des Steuerventils 2 zu- und abschaltbar ist, erstreckt sich von einer Abzweigung des Hauptkühlkreises C abströmseitig des Absperrorgans 5.4 über einen Innenraum-Wärmetauscher 8 zu einem Einlass 9 des Thermostatventils 1, welcher unabhängig von der Ventilstellung ständig freigeschaltet ist, und mündet dann in die vom Thermostatventil 1 über die Pumpe 4 und das Absperrorgan 5.2 zur Brennkraftmaschine 3 zurücklaufende Kühlmittelleitung.

Komplettiert wird das Kühlsystem durch ein Ausgleichsgefäß 10, welches im Zuge einer ständig geöffneten Zweigleitung 11 angeordnet ist, die vom Hauptkühlkreis C abströmseitig des Absperrorgans 5.4 abzweigt und in den kontinuierlich freigeschalteten Ventileinlass 9 mündet.

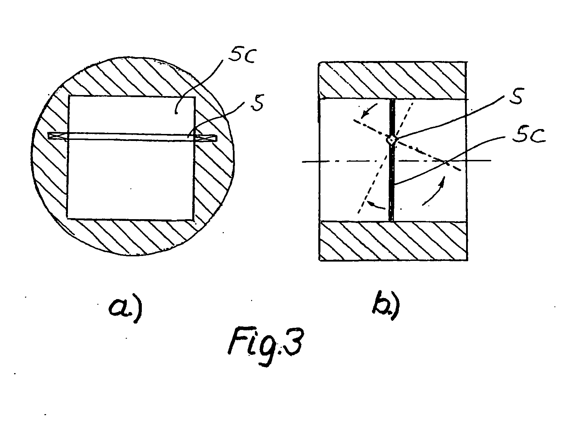

Die in den Fign. 2 und 3 im einzelnen gezeigten Absperrorgane 5 sind vorzugsweise im Bereich von Schlauchkupplungen 12 (Fig. 2) in das Kühlsystem integriert und als passiv arbeitende Verschlussklappen ausgebildet. Gemäß Fig. 2 bestehen diese jeweils aus zwei unabhängig voneinander um eine gemeinsame Drehachse S schwenkbaren Klappenhälften 5A und 5B, welche durch je eine Rückstellfeder 13 in die in Fig. 2a gezeigte Sperrlage gedrückt werden, in der sie den Kühlmittelpfad blockieren, solange die Umwälzpumpe 4 stillsteht und die anliegende Druckdifferenz im Bereich des Thermosyphoneffekts verbleibt, und zwar unabhängig davon, auf welcher Seite der Verschlussklappe 5 der höhere Differenzdruck ansteht. Auf diese Weise werden thermosyphonbedingte Wärmeverluste bei stillstehender Umwälzpumpe 4 sowohl in der Warmlaufphase bis zum Erreichen der Betriebstemperatur als auch in der Abkühlphase nach dem Abschalten der Brennkraftmaschine 3 wirksam vermieden. Wenn die Pumpe 4 jedoch läuft oder bei stillstehender Pumpe 4 eine Druckdifferenz oberhalb des Thermosyphoneffekts an der Verschlussklappe 5 anliegt, so öffnet sich diese und gibt den Kühlmittelpfad frei, und zwar wiederum unabhängig davon, in welcher Richtung der Druckgradient abfällt, wie dies in Fig. 2a durch die gestrichelte Klappenstellung für eine nach rechts und durch die strichpunktierte Klappenstellung für eine nach links abfallende Druckdifferenz angedeutet ist.

In der Ausführungsform nach Fig. 3 besteht das Absperrorgan aus einer einstückigen Verschlussklappe 5C, die um eine exzentrische Drehachse S schwenkbar gelagert und entweder unter Schwerkraftwirkung oder federnd, etwa - wie gezeigt - durch Ausbildung der Drehachse S als Torsionsfeder, in der Sperrlage gehalten wird, unter der Wirkung einer im Sinne der Fig. 3b nach rechts oder links gerichteten Druckdifferenz oberhalb des Thermosyphondrucks jedoch entgegen der Schwer- oder Federkraft in der einen oder anderen Drehrichtung verschwenkt und dadurch den Kühlmittelpfad freischaltet, wie dies wiederum durch die gestrichelten und strichpunktierten Klappenstellungen in Fig. 3b dargestellt ist.

Abschließend sei darauf hingewiesen, dass durch die Absperrorgane 5 nicht nur eine Zirkulation des Kühlmittels unter Thermosyphonwirkung in einem geschlossenen Kühlkreislauf, sondern im Rahmen der Erfindung auch eine Konvektionströmung aufgrund der Temperaturdifferenz in der Flüssigkeitssäule von längeren Steigleitungen vermieden werden kann, wie dies in Fig. 1 durch das etwa in der Mitte der Steigleitung 14 angeordnete Absperrorgan 5.2 angedeutet ist. Ferner können die Absperrorgane 5 anstatt in die Kühlmittelleitungen bzw. - kupplungen ohne weiteres auch in das Kühlkanalsystem der Brennkraftmaschine 3 selbst integriert sein, und weiterhin ist es möglich, anstelle von passiv, gewünschtenfalls auch aktiv gesteuerte, z. B. elektrisch betätigte Absperrorgane einschließlich einer zugeordneten Steuereinheit mit einem gleichartig symmetrischen Schaltverhalten zu verwenden.

## Patentansprüche

1. Kühlsystem für eine Brennkraftmaschine (3), mit einer schaltbaren Kühlmittel-Umwälzpumpe (4) und mindestens einem den Kühlmittelkreis (A, B, C, D) bei stillstehender Umwälzpumpe zur Vermeidung eines Thermosyphoneffekts blockierenden Verschlusselement (5), **dadurch gekennzeichnet, dass**
als Verschlusselement ein bei stillstehender Umwälzpumpe (4) unabhängig von der Richtung der Druckdifferenz oberhalb des Thermosyphondrucks geöffnetes und im Bereich des Thermosyphondrucks in die Schließlage zurückgesteuertes Absperrorgan (5.1.....5.4) vorgesehen ist.

2. Kühlsystem nach Anspruch 1, **dadurch gekennzeichnet, dass** das Absperrorgan (5) selbsttätig geschlossen und passiv druckgesteuert geöffnet ist.

3. Kühlsystem nach Anspruch 1 oder 2, **dadurch gekennzeichnet, dass** das Absperrorgan (5) als beidseitig einer mittleren Schließlage öffnende Verschlussklappe (5A, 5B, 5C) ausgebildet ist.

4. Kühlsystem nach einem der vorhergehenden Ansprüche, **dadurch gekennzeichnet, dass**
die Verschlussklappe (5C) unter Schwerkraftwirkung in der Schließlage gehalten ist.

5. Kühlsystem nach einem der Ansprüche 1 bis 3, **dadurch gekennzeichnet, dass**
die Verschlussklappe (5A, 5B, 5C) federnd in der Schließlage gehalten ist.

6. Kühlsystem nach Anspruch 5, **dadurch gekennzeichnet, dass** die Verschlussklappe (5C) durch eine die Klappendrehachse (S) bildende Torsionsfeder in der Schließlage gehalten ist.

7. Kühlsystem nach einem der vorhergehenden Ansprüche, **dadurch gekennzeichnet, dass**
die Verschlussklappe aus zwei entgegen Federkraft um eine Drehachse (S) schwenkbaren Klappenteilen (5A, 5B) besteht.

8. Kühlsystem nach einem der Ansprüche 1 bis 6, **dadurch gekennzeichnet, dass**
die Verschlussklappe (5C) einteilig ausgebildet und exzentrisch gelagert ist.

9. Kühlsystem nach einem der vorhergehenden Ansprüche, **dadurch gekennzeichnet, dass**
das Absperrorgan (5) in eine Kühlmittelkupplung (12) integriert ist.

## Claims

1. A cooling system for an internal combustion engine (3) comprising a switchable coolant-circulating pump (4) and at least one closure element (5) which, when the pump is inoperative, blocks the coolant circuit (A, B, C, D) to avoid a thermosiphon effect, **characterised in that** the closure element is a valve (5.1... 5.4) which opens irrespective of the direction of the pressure difference above the thermosiphon pressure and is moved back into the closed position when near the thermosiphon pressure.

2. A cooling system according to claim 1, **characterised in that**
the valve (5) is automatically closed and passively opened under pressure control.

3. A cooling system according to claim 1 or claim 2, **characterised in that**
the valve (5) is a cap (5A, 5B, 5C) which opens on both sides of the central closed position.

4. A cooling system according to any of the preceding claims, **characterised in that**
the cap (5C) is held in the closed position by gravity.

5. A cooling system according to any of claims 1 to 3, **characterised in that**
the cap (5A, 5B, 5C) is resiliently held in the closed position.

6. A cooling system according to claim 5, **characterised in that**
the cap (5C) is held in the closed position by a torsion spring forming the axis of rotation (S) of the cap.

7. A cooling system according to any of the preceding claims, **characterised in that**
the cap comprises two parts (5A, 5B) which pivot round an axis (S) against the force of a spring.

8. A cooling system according to any of claims 1 to 6, **characterised in that**
the cap (5C) is in one piece and eccentrically mounted.

9. A cooling system according to any of the preceding claims, **characterised in that**
the valve (5) is incorporated in a coolant coupling (12).

## Revendications

1. Système de refroidissement pour un moteur à combustion interne (3) comportant une pompe de circulation (4) d'agent de refroidissement, commutable, et ayant au moins un élément de fermeture (5) installé dans le circuit d'agent de refroidissement (A, B, C, D) et qui se bloque lorsque la pompe de circulation (4) est à l'arrêt pour éviter un effet de thermosiphon,
système **caractérisé en ce que**
l'élément de fermeture est un organe d'arrêt (5.1...5.4) qui est ouvert indépendamment du sens de la différence de pression au-dessus de la pression de thermosiphon et qui est commandé pour revenir en position de fermeture dans la plage de la pression de thermosiphon.

2. Système de refroidissement selon la revendication 1,
**caractérisé en ce que**
l'organe d'arrêt (5) est fermé automatiquement et il est ouvert de manière passive, commandé par la pression.

3. Système de refroidissement selon la revendication 1 ou 2, **caractérisé en ce que**
l'organe d'arrêt (5) est réalisé sous la forme d'un volet (5A, 5B, 5C) qui s'ouvre des deux côtés d'une position médiane de fermeture.

4. Système de refroidissement selon l'une des revendications précédentes,
**caractérisé en ce que**
le volet (5C) est tenu en position fermée par l'action du poids.

5. Système de refroidissement selon l'une des revendications 1 à 3,
**caractérisé en ce que**
le volet (5A, 5B, 5C) est tenu en position de fermeture par un ressort.

6. Système de refroidissement selon la revendication 5,
**caractérisé en ce que**
le volet (5C) est tenu en position de fermeture par un ressort de torsion constituant son axe de rotation (S).

7. Système de refroidissement selon l'une quelconque des revendications précédentes,
**caractérisé en ce que**
le volet se compose de deux parties (5A, 5B) pivotant autour d'un axe de rotation (S) contre la force développée par un ressort.

8. Système de refroidissement selon l'une des revendications 1 à 6,
**caractérisé en ce que**
le volet (5C) en une seule pièce, est monté de manière excentré.

9. Système de refroidissement selon l'une quelconque des revendications précédentes,
**caractérisé en ce que**
l'organe d'arrêt (5) est intégré dans un raccord d'agent de refroidissement (12).
